# EUROPEAN PATENT SPECIFICATION

(11) **EP 1 016 782 B1**
(45) Date of publication and mention of the grant of the patent: **09.02.2005**
(21) Application number: 99124360.1
(22) Date of filing: 07.12.1999
(51) Int. Cl.: F02M 21/06

(54) **Apparatus for feeding liquid petroleum gas to internal combustion engines, comprising an isobaric vaporiser and a pressure reducer downstream of it**
Vorrichtung zur Zuführung eines Flüssiggases für eine Brennkraftmaschine mit einem isobaren Verdampfer und einem nachgeschalteten Druckminderer
Dispositif d'alimentation de pétrole liquéfié liquide pour moteur à combustion interne avec un vaporisateur isobarique et un réducteur de pression monté en aval

(30) Priority: 30.12.1998 IT PC980040
(43) Date of publication of application: 05.07.2000
(73) Proprietor: POLIAUTO di P. Parietti & C. S.n.c., 29100 Piacenza PC (IT)
(72) Inventor: Parietti, Pietro, 29100 Piacenza (IT)
(74) Representative: La Ciura, Salvatore

(56) References cited:
- DE-A- 2 613 175
- DE-A- 2 946 261
- DE-A- 3 142 430
- FR-A- 2 354 507
- US-A- 4 526 155
- US-A- 4 528 966
- PATENT ABSTRACTS OF JAPAN vol. 010, no. 105 (M-471), 19 April 1986 (1986-04-19) & JP 60 237156 A (YANMAR DIESEL KK), 26 November 1985 (1985-11-26)

## Description

This invention relates to a unit for the supply of liquid petroleum gas (LPG) to internal combustion engines, according to claim 1.

In particular, the unit comprises a vaporiser constituted by a heated tubular element inside which the gas emitted from the tank flows in such a way that it vaporises, the outlet of the said vaporiser being directed towards a filter that removes all impurities from the gas vapour.

Downstream, a pressure reducer conveys the gas at the ideal pressure to fuel the engine.

This solution eliminates all impurities from the gas before it enters the reducer, so that the moving mechanical parts only come into contact with gas already purified of oil and tar residues and the like, thus eliminating the risk of clogging, which is the main cause of malfunctions in LPG vehicle fuelling units.

Gas is a good alternative to traditional fuels, compared with which it offers the advantage of a very low level of pollution as well as a lower cost.

The main component of conventional units that supply gas to the engine is a vaporiser/reducer unit in which the gas passes from the liquid to the gaseous state and its pressure is simultaneously reduced below the original pressure, after which it is conveyed to the engine. Document DE 2613175 discloses a prior art unit for supplying LPG to an internal combustion engine.

In some known types of apparatus, the vaporiser and reducer are combined in a single unit. The LPG is conveyed from a tank to a chamber heated by the engine cooling water, where it is converted from the liquid to the gaseous state.

The pressure of the gas acts on a membrane which is subject to the action of a spring on the opposite side and activates a valve that closes the LPG supply pipe.

The pressure of the gas in the said vaporisation chamber is therefore determined mainly by the characteristics of the spring.

Means are also present in the said unit which further reduce the gas pressure to the value required to fuel the engine.

However, this solution presents two drawbacks.

Firstly, the unit is liable to clogging caused by the accumulation of oil, tar and other petroleum distillation derivatives which are not fully eliminated from the liquid gas and accumulate in the vaporiser/reducer; in time this interferes with the movement of the mechanical parts, prejudicing the correct operation of the unit. The second drawback is that a device which acts as both a vaporiser and a pressure reducer must have dimensions that, however limited, always involve problems of positioning in the engine compartment, especially in modern cars, in which the available space is very small.

DE 2613175 describes to a gas feeding system comprising a tank 1, a first heat exchanger or vaporizer 3 (for the gas) connected in series with a second heat exchanger 7 wherein the comburent air is brought to the same temperature of the gas.

Downstream, a pressure regulator is provided, between the exchanger 7 and the engine 6.

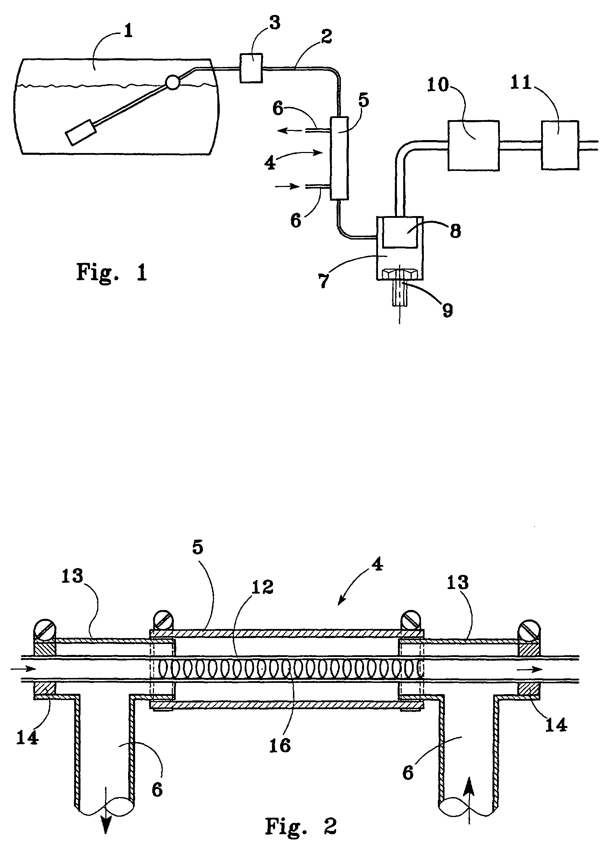

FR 2354507 relates to a gas feeding system for e.g. lifting trucks, in which the gas tank 2 is heated and the gas vapour is drawn directly from the tank through a pipe 4 (see fig. 2).

JP 60237156 shows a fuel heater for kerosene engines consisting of a cylindrical body on the surface of which a multi-stage helical channel is provided, and which is closed by an external jacket.

The present invention offers a unit designed to supply LPG to internal combustion engines which comprises an isobaric vaporiser and a separate pressure reducer downstream of the said vaporiser.

The vaporiser is simply constituted by a heated pipe, with internal ribbing or a helical wall which forces the gas to flow for a certain distance in contact with the heated surface, but without moving parts.

This solution eliminates impurities from the gas at the exit from the vaporiser so that the gas does not come into contact with moving mechanical parts in the first part of the unit, upstream of the filter, while in the pressure reducer downstream of the filter, the gas is already purified of all impurities and the risk that these mechanical parts will be jammed by oil deposits or the like is practically nil.

The present invention will now be described in detail, by way of example but not of limitation, by reference to the annexed figures in which:
- figure 1 schematically illustrates a unit designed to supply LPG to an internal combustion engine
- figure 2 schematically illustrates a cross-section of a vaporiser forming part of the unit in accordance with the invention.

With reference to figure 1, no. 1 indicates the liquid gas tank fitted in a vehicle.

A pipe 2 on which a solenoid valve 3 is fitted leads from the tank to a vaporiser assembly indicated as 4.

The said vaporiser, which will be described in greater detail below by reference to figure 2, comprises a pipe in which the gas is vaporised; the said pipe is surrounded by a jacket 5 which forms a chamber around the pipe in which hot water conveyed from the engine through a pair of pipes 6 is made to circulate.

A filter 7 of known type, such as the type comprising a filter cartridge 8 and a discharge or drainage outlet 9, is fitted downstream of the vaporiser. The outlet of filter 7 is connected to a pressure reducer 10, which leads to engine fuelling devices 11.

The pressure reducer can be of known type; for example, it could advantageously be constituted by a pressure reducer of the type described in Italian patent no. 1,278,588 by the same applicant, which is incorporated here for reference purposes.

Vaporiser 4, which is more clearly visible in figure 2, is advantageously constituted by a metal pipe 12 or the like, such as a copper pipe, to which is fitted a pair of T-couplings or the like 13, connected to pipes 6, which lead to the engine cooling water circulating plant.

A jacket or sleeve 5, clamped for example by hose clips or the like, is fitted to couplings 13, while on the opposite side each coupling is closed by a ring gasket 14 or the like fitted over pipe 12 and inside coupling 13, as shown in figure 2.

Thus a chamber demarcated internally by pipe 2 and externally by couplings 13 and jacket 5, and at each end by ring gaskets 14, is formed around a section of the said pipe 2.

Hot water from the engine is circulated in this chamber, and its heat is transmitted to the gas which flows through pipe 2, transforming it to the gaseous state.

The interior of the section of pipe 2 surrounded by jacket 5 preferably features embossed ribbing or a helical wall 16, the purpose of which is to force the gas along a spiral route in contact with the wall of pipe 2 to ensure the necessary transfer of heat from the water circulating in jacket 5 to the gas. During operation, the pressure in tank 1 forces the gas into pipe 2, through which it is conveyed to vaporiser 4. Here the gas absorbs heat through the wall of pipe 2 from the water circulating round the pipe in jacket 5, and is thus converted to the gaseous state.

When the unit comes into operation, the increased pressure of the vaporised gas forces back the liquid gas present in downstream pipe 2 for a certain distance, causing some of it to enter tank 1, until the pressure in vaporiser 4 balances the pressure of the gas in the tank (solenoid valve 3 allows backflow of gas to the tank when the coil is not energised).

Once the unit is fully operational, the flow stabilises, and a sufficient amount of liquid gas exits from the tank to offset the amount of vaporised gas used to fuel the engine.

As the gas flows through pipe 2, it is forced by spiral 16 to follow a helical route along the wall of the pipe, so that the gas remains in contact with the wall for longer and absorbs the necessary amount of heat from the water circulating outside it.

When the gas, now in the vapour state, exits from the pipe, it is filtered by cartridge 8 and conveyed, totally free of all distillation residues, to the pressure reducer where there are moving mechanical parts.

As will appear clearly from the description supplied, the unit in accordance with the invention offers considerable advantages.

Firstly, the gas only comes into contact with moving mechanical parts after it has been perfectly filtered and all impurities present in the liquid phase have been removed, thus eliminating the risk of deposits which can jam the moving parts and cause malfunctions.

Secondly, the unit in accordance with the invention is much smaller than conventional vaporiser/reducers. Finally, it can be made with parts already known and used in this field, with no need for the onerous investments required to make the currently known vaporiser-reducers.

In addition, the unit can easily be adapted for various types of vehicle, as it is sufficient, for example, to vary the length of the heated section of pipe 2, with no need for major modifications of the existing vehicle fuelling apparatus.

## Claims

1. Unit for the supply of liquid petroleum gas to internal combustion engines, comprising an isobaric vaporiser (4) whose inlet is connected to the outlet of a tank (1) and whose outlet leads to a pressure reducer (10), **characterized in that** the said vaporiser is constituted by a tubular metal pipe (12) through which the LPG is conveyed, said pipe is surrounded for at least one section by a sleeve (5) coaxial with it and connected to pipes (6) for the circulation of hot water from the engine, the interior of the said pipe (12) that constitutes the vaporiser has ribbing or a helical wall (16), designed to impart to the flow of liquid gas a spiral movement which increases the time for which the gas remains in contact with the heated wall of the said vaporiser.

2. Unit as claimed in claim 1, **characterised in that** the inner surface of the said tube (12) has an embossed spiral wall.

3. Unit as claimed in any of the preceding claims, **characterised in that** it includes a filter element (7) situated between the outlet of the said vaporiser (4) and the intake of the said pressure reducer (10).

4. Unit for the supply of LPG to internal combustion engines according to claim 1, further comprising:
• a tank (1);
• a pressure reducer (10) downstream of the said vaporiser which is connected to the engine fuelling device.

## Patentansprüche

1. Apparat zur Zuführung von Flüssiggas zu Verbrennungsmotoren, umfassend einen isobaren Verdampfer (4), dessen Ausgang einem Druckreduzierer (10) zugeführt wird, **gekennzeichnet durch** die Tatsache, dass besagter Verdampfer aus einem Metallrohr (12) besteht, **durch** welches das LPG geleitet wird; besagtes Rohr ist, zumindest streckenweise, von einer Hülse (5) umgeben, die mit ihm koaxial und mit Leitungen (6) verbunden ist zur Zirkulierung von aus dem Motor stammenden warmen Wasser; das Innere des besagten Rohres (12), das den Verdampfer bildet, besitzt eine Rippe oder eine Wand mit schraubenförmigem Verlauf (16), die geeignet ist, dem flüssigen Gasfluss einen spiralförmigen Verlauf zu geben, was die Zeit erhöht, in der das Gas mit der erhitzten Wand des besagten Verdampfers in Kontakt bleibt.

2. Apparat nach Anspruch 1, **gekennzeichnet durch** die Tatsache, dass die interne Oberfläche des besagten Rohres (12) eine hervorspringende Wand besitzt, die einen spiralförmigen Verlauf aufweist.

3. Apparat nach jeglichem der vorhergehenden Ansprüche, charakterisiert durch die Tatsache, dass er ein filtrierendes Element (7) enthält, welches sich zwischen dem Ausgang des besagten Verdampfers (4) und dem Eingang des besagten Druckreduzierers (10) befindet.

4. Apparat zur Zuführung von LPG zu Verbrennungsmotoren nach Anspruch 1, der ferner umfasst:
• einen Behälter (1);
• einen Druckreduzierer (10) nach besagtem Verdampfer, der mit der Zuführungsvorrichtung des Motors verbunden ist.

## Revendications

1. Appareil pour l'alimentation en gaz pétrolier liquéfié des moteurs à combustion interne, comprenant un vaporisateur isobarique (4) à sortie directe sur un réducteur de pression (10), **caractérisé par le fait que** ledit vaporisateur est constitué d'un tube métallique (12) dans lequel passe le GPL, ledit tube étant entouré, sur une partie au moins, d'un manchon (5) coaxial et relié à des conduits (6) dans lesquels circule de l'eau chaude en provenance du moteur, sachant que l'intérieur dudit tube (12) qui constitue le vaporisateur présente une nervure ou une paroi de forme hélicoïdale (16) en mesure d'imprimer au flux de gaz liquide un mouvement en spirale qui accroît la durée pendant laquelle le gaz reste en contact avec la paroi réchauffée dudit vaporisateur.

2. Appareil selon la revendication 1) **caractérisé par le fait que** la surface interne dudit tube (12) est une paroi en relief en forme de spirale.

3. Appareil selon une des revendications précédentes, **caractérisé par le fait qu'**il comprend un élément filtrant (7) situé entre la sortie dudit vaporisateur (4) et l'entrée dudit réducteur de pression (10).

4. Appareil pour l'alimentation en GPL des moteurs à combustion interne selon la revendication 1) comprenant également :
• un réservoir (1);
• un réducteur de pression (10) situé en aval dudit vaporisateur, qui est relié au dispositif d'alimentation des moteurs.
